# EUROPEAN PATENT APPLICATION

(11) **EP 1 454 529 A2**
(43) Date of publication of application: **08.09.2004**
(21) Application number: 04425124.7
(22) Date of filing: 27.02.2004
(51) Int. Cl.: A21C 9/06

(54) **Process for manufacturing folded pizza pies called "calzoni", and its production line**

(30) Priority: 28.02.2003 IT RM20030088
(71) Applicant: Mar.Is S.r.l., 04100 Latina (IT)
(72) Inventor: Tontini, Umberto, 00042 Anzio (IT)
(74) Representative: Cipriani, Guido

(57) **Abstract**

A process of manufacturing folded pizza pies called "calzoni" includes steps of preparing a *crêpe*, filling the same, folding it for its closure, and coating it with bread crumbs. The filling comprises the application on the *crêpe* of a plurality of stuffing ingredients, in case one directly on top of the other, in a form of a sufficiently thick fluid to provide a stuffing with distinct tastes of the ingredients of said plurality. A production line of "calzoni" is also described.

## Description

This invention concerns a process of manufacturing folded pizza pies called "calzoni". Further, the invention relates to its production line .

A known process of manufacturing "calzoni", also called "sofficini" (trade name), includes steps of preparing a *crêpe*, filling the same, folding it for its closure, and coating it with bread crumbs, in which the filling step consists of an application of only one ingredient, generally provided in the form of a fluid through a dispensing apparatus by pressure and adapted to constitute the stuffing of the "calzone".

In this way the product obtained has only one taste. In the past it has been already thought to overcome such a monotony of flavour, by delivering onto the *crêpe* two stuffing ingredients by two different dispensing apparatuses. In order to prevent the stuffing ingredients from being mixed together and avoid the consequent jumble of tastes, provision has been made of separating a stuffing ingredient from the other one by means of a thin small omelette horizontally extended with respect to the *crêpe* so that the lower surface of such a small omelette is in contact with the one ingredient and the upper surface thereof is in contact with the other ingredient.

However, it should be understood that such a process offers few advantages since an additional step of applying the small omelette must be provided. Further, other stuffing ingredients cannot be added otherwise the stuffing becomes too bulky, in view of the separating omelette being introduced to avoid the jumble of tastes.

The present invention aims to overcome the prior art drawback above mentioned.

In particular, an object of the present invention is to manufacture a "calzone" filled with a plurality of stuffing ingredients, i.e. also more than two ingredients.

Another object of the present invention is to manufacture a "calzone" filled with a plurality of stuffing ingredients, which remain perfectly distinct in both their taste and different consistency.

In its first aspect, the invention provides a process of manufacturing folded pizza pies called "calzoni", including steps of preparing a *crêpe*, filling the same, folding it for its closure, and coating it with bread crumbs, wherein said filling step comprises the application on the *crêpe* of a plurality of stuffing ingredients, in case one directly on top of the other, in a form of a sufficiently thick fluid to provide a stuffing with distinct tastes of the stuffing ingredients of said plurality.

In a second aspect of the invention, it provides a production line of folded pizza pies called "calzoni", including a wheel carrying on its circumference a plurality of equally spaced, heated plates for creating *crêpes*, a carrousel conveyor holding small plates, each small plate, which is made of two halves suitable to fit together as a result of a mutual diametral rotation, being adapted to receive a respective *crêpe* from said wheel, a filling station to fill the *crêpes*, individually supported by the small plates, a folding station to turn the small plates supporting the *crêpes* by a cam profile provided along the carrousel conveyor so that each *crêpe* is closed in the form of a folded pizza pie, a receiving and wetting station to receive and dipping the *crêpes* into a batter, and a coating station to coat them with bread crumbs, the filling station comprising more than two dispensing apparatuses, which are superimposed upon said carrousel conveyor in a close sequence in the direction of the carrousel conveyor.

Among the advantages of process and the production line according to the invention, a "calzone" filled with plural ingredients is manufactured in short time.

The present invention will be now described with reference to a preferred embodiment thereof, but it should be understood that modifications can be made without departing from the spirit of the present invention, in connection with the figures of the accompanying drawing, in which:
Figure 1 shows a diagrammatic view of a production line of "calzoni", in which a group of dispensing apparatuses according to the present invention is represented in a solid line front view on a phantom background;
Figure 2 shows a fragmentary cross-sectioned front view of a dispensing apparatus in the dispensing apparatus group in Figure 1; and
Figure 3 shows a cross-section view taken along a line A-A of the dispensing apparatus in Figure 2.

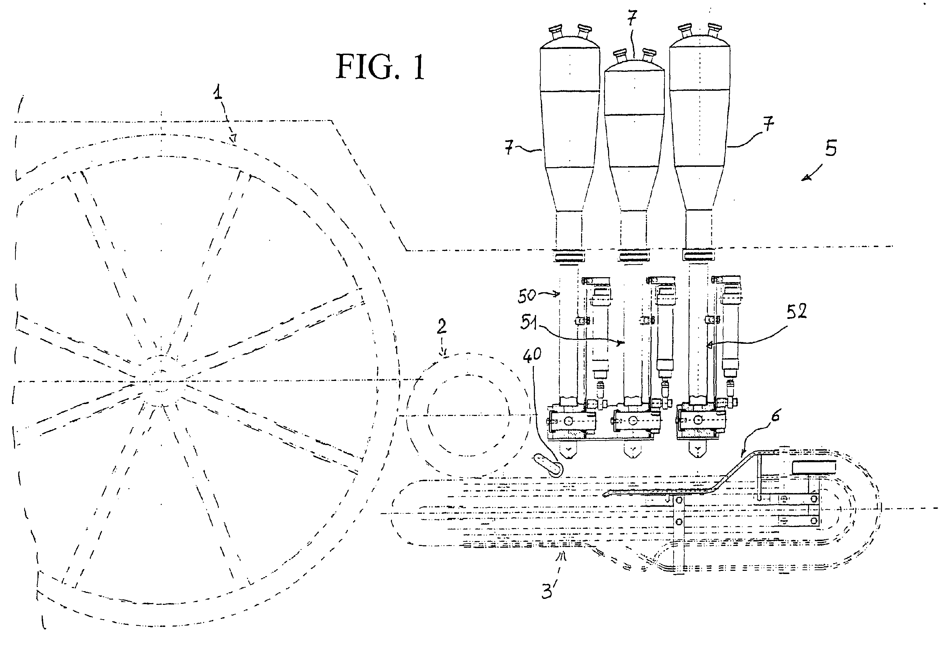

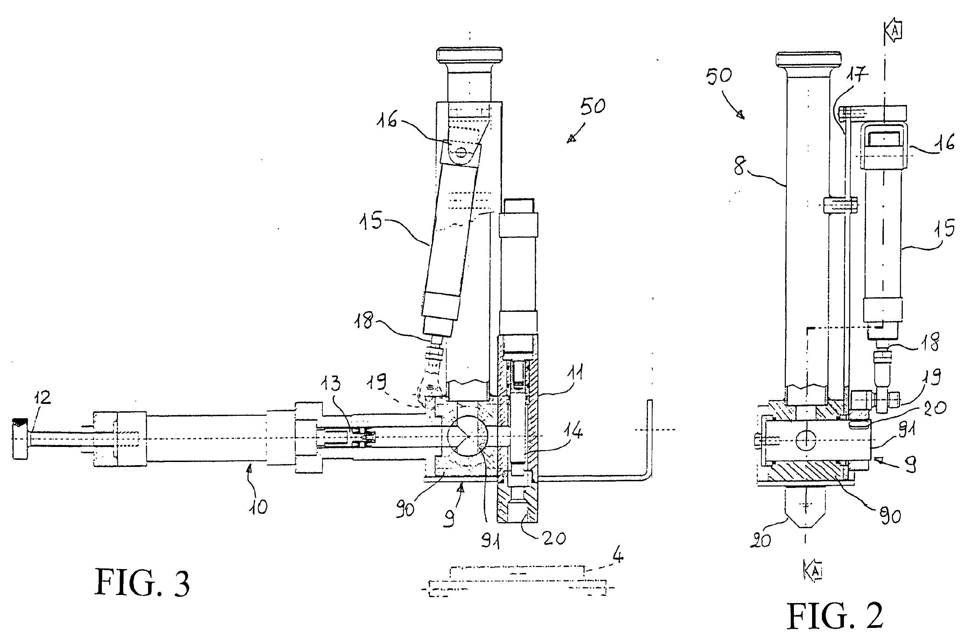

With reference to the drawings, the general configuration of a production line of "calzoni" is shown in Figure 1. In Figure 1, a wheel 1 is depicted by dotted line. On its circumference the wheel 1 carries a plurality of equally spaced, heated plates (not shown) plunging into a dough tank for *crêpes* to create the same from a dough. A wheel 2, co-operating with the wheel 1, displaces one *crêpe* after the other from the wheel 1 to a carrousel conveyor 3. The carrousel conveyor 3 holds small plates as shown by dotted line in Figure 3 (indicated as 4). Each small plate 4, which is made of two halves suitable to fit together as a result of a mutual rotation about a diametral axis, is adapted to receive a respective *crêpe*. The *crêpe* on each small plate is rolled out by a roller 40. A filling station 5 to fill the *crêpes,* individually supported by the small plates, follows.

According to the present invention the filling station 5 comprises three dispensing apparatuses, indicated as 50, 51, and 52, which are superimposed upon the carrousel conveyor 3 in a close sequence in the direction of the carrousel conveyor. The dispensing apparatuses 50, 51, and 52 receive from above the ingredients fed through pipes, not shown, from hopper feeders (also the last ones being not shown). By the dispensing apparatuses 50, 51, and 52, whose structure and operation will be explain below with the reference to Figures 2 and 3, the respective ingredients are fed onto the *crêpes* carried on the small plates of the carrousel conveyor.

After the filling station 5, a folding station 6 is provided on the carrousel conveyor 3 in order to turn the small plates supporting the *crêpes*. To this purpose in the carrousel conveyor 3, there is conventionally a cam profile. Following this cam profile, the two halves of every small plate mutually rotate the one toward the other so that each *crêpe* is closed into a folded pizza pie. Consecutively, a receiving and wetting station and a coating station, not shown, are provided in order to receive the *crêpes* and wet them with batter, and coat them with bread crumbs.

With the reference to Figure 2 and 3, which are a front view and a cross-section view thereof, respectively, one dispensing apparatus, that for example is indicated as 50 in Figure 1, is shown.

The dispensing apparatus 50 comprises a storage unit 7 in the form of a silo designed to receive the ingredient to be delivered. The storage unit 7 is connected through a vertical connection pipe 8 to an underneath switching valve 9. The switching valve 9 includes a three-way rotary body valve 91 inside its seat 90. The seat 90 of the switching valve 9 communicates, besides with the vertical connection pipe 8, also with a horizontal feeding cylinder 10 and, oppositely, with a delivering cylinder 11.

When the rotary body valve 91 is revolved to open a passage way with the horizontal feeding cylinder 10, the last one withdraws by vacuum a batch of ingredient at a flow rate which is settable by a knob 12, and advances it by means of its piston 13 to the delivering cylinder 11.

The delivering cylinder 11 is vertically situated upon the small plates 4 of the carrousel conveyor for delivering a particular stuffing ingredient, as shown in Figure 3. The delivering cylinder 11 advances by its piston 14 the batch of fluid ingredient received by the feeding cylinder 10 onto a *crêpe*.

The rotary body valve 91 is rotated by a pneumatic cylinder 15 which is mounted on a side of the connection pipe 8.

The pneumatic cylinder 15 is hung in a swinging way by means of an upper supporting element 16 to a vertical post 17 connected to the vertical connection pipe 8. The piston rod 18 of the pneumatic cylinder 15 is connected to a crank 19 which is keyed by a key 20 to the rotary body valve 91.

The pneumatic cylinder 15 rotates the rotary body valve 91 so that its ways connect periodically the vertical connection pipe 8 to the feeding cylinder 10 and subsequently the feeding cylinder 10 to the delivering cylinder 11.

The delivering cylinder 11 has an ejection nozzle 20 of fluid ingredient. Even if not shown, the ejection nozzle can have ports of different cross-section shape: circular, ring-shape, half-ring shape, rectangular. The choice of the nozzles to be applied to the delivering cylinder depends on a desired shape for the spout of ingredient on the *crêpe*.

The three ingredients can be put circularly side by side according to rings or half-rings, or placed one on top of the other in the form of parallelepipeds or cylinders. By way of example, to create a "calzone" with spinach, cheese and mozzarella, the spinach ingredient is placed on the bottom by the dispensing apparatus 50, the cheese ingredient is delivered by the dispensing apparatus 51 onto the spinach ingredient and then the mozzarella ingredient is applied by the dispensing apparatus 52 on the top.

The ingredients have such a consistency that they are not mixed together either when the *crêpe* is folded by turning the two halves of the small plate and closed.

The dispensing apparatus is manufactured in such a way to allow a feeding of the ingredients at a precise batch, since the delivering is not performed by pressure as in the traditional dispensing apparatuses. According to the invention, the ingredient is sucked by the feeding cylinder 10 in a desired amount and then sent to the delivering cylinder 11 through the switching valve 9, without any possibility to change the ingredient flow-rate in the various batches.

## Claims

1. A process of manufacturing folded pizza pies called "calzoni", including steps of preparing a *crêpe*, filling the same, folding it for its closure, and coating it with bread crumbs, **characterized in that** said filling step comprises the application on the *crêpe* of a plurality of stuffing ingredients, in case one directly on top of the other, in a form of a sufficiently thick fluid to provide a stuffing with distinct tastes of the stuffing ingredients of said plurality.

2. A production line of folded pizza pies called "calzoni", including a wheel (1) carrying on its circumference a plurality of equally spaced, heated plates for creating the *crêpes*, a carrousel conveyor (3) holding small plates (4), each small plate (4), which is made of two halves suitable to fit together as a result of a mutual diametral rotation, being adapted to receive a respective *crêpe* from said wheel, a filling station (5) to fill the *crêpes*, individually supported by the small plates (4), a folding station (6) to turn the small plates supporting the *crêpes* by a cam profile provided along the carrousel conveyor so that each *crêpe* is closed in the form of a folded pizza pie, a receiving and wetting station to receive and dipping the *crêpes* into a batter, and a coating station to coat them with bread crumbs, **characterized in that** said filling station (5) comprises more than two dispensing apparatuses (50, 51, 52), which are superimposed upon said carrousel conveyor (3) in a close sequence in the direction of the carrousel conveyor.

3. The production line according to claim 2, **characterized in that** each dispensing apparatus (50, 51, 52), communicating with an ingredient pipe that advances the respective fluid ingredient, comprises
- a storage unit (7) in the form of a silo connected through a vertical connection pipe (8) to
- an underneath switching valve (9) including a three-way rotary body valve (91), adapted to connect periodically and co-ordinately said connection pipe (8) to a horizontal feeding cylinder (10), feeding by vacuum the ingredient at a settable flow-rate, and subsequently said feeding cylinder (10) to
- a delivering cylinder (11) vertically situated on the small plates (4) of the carrousel conveyor (3) for delivering onto said *crêpe* a particular stuffing ingredient received from the feeding cylinder (10), in case on top of other stuffing ingredient already delivered by another preceding dispensing apparatus in the line.

4. The production line according to claim 3, **characterized in that** said rotary body valve (91) is rotated by a pneumatic cylinder (15), which is mounted on a side of said connection pipe (8) and has a piston rod (18) connected to the rotary body valve (91) through a crank (19).

5. The production line according to claim 3, **characterized in that** said delivering cylinder (11) has an ejection nozzle of the fluid ingredient with a circular cross-section.

6. The production line according to claim 3, **characterized in that** said delivering cylinder (11) has an ejection nozzle of the fluid ingredient with a ring-shape cross-section.

7. The production line according to claim 3, **characterized in that** said delivering cylinder (11) has an ejection nozzle of the fluid ingredient with a half ring-shape cross-section.

8. The production line according to claim 3, **characterized in that** said delivering cylinder (11) has an ejection nozzle of the fluid ingredient with a rectangular cross-section.
